# DEMANDE DE BREVET EUROPEEN

(11) **EP 0 624 883 A1**
(43) Date de publication de la demande: **17.11.1994**
(21) Numéro de dépôt: 94401012.3
(22) Date de dépôt: 06.05.1994
(51) Int. Cl.: G21C 13/036, G21C 21/00, B23K 15/04

(54) **Procédé et dispositif de fixation étanche d'un tube de traversée dans une paroi bombée d'un composant de réacteur nucléaire**

(30) Priorité: 12.05.1993 FR 9305727
(71) Demandeur: FRAMATOME, 92400 Courbevoie (FR)
(72) Inventeur: Fournier, Yves, F-71530 Chatenay Le Royal (FR)
(74) Mandataire: Bouget, Lucien

(57) **Abrégé**

Les tubes de traversée (8) sont fixés par frettage dans des ouvertures traversant la paroi bombée (2). On ferme de manière étanche une extrémité (8a) des tubes saillante par rapport à la surface convexe de la paroi (2) et on rapporte et on fixe de manière étanche, une paroi (18) portant un canon à électrons (19) sur la paroi bombée (2), de manière à délimiter une chambre étanche (24). On établit une pression réduite à l'intérieur de la chambre étanche (24) et on dirige le tir (19a) du canon à électrons (19) suivant une génératrice de la zone de jonction d'un tube de traversée (8) avec une ouverture de traversée de la paroi bombée (2). On balaye la zone de jonction par un faisceau d'électrons en déplaçant le canon à électrons (19) en rotation autour de l'axe du tube de traversée (8). L'invention est applicable en particulier au soudage des adaptateurs de traversée (8) d'un couvercle de cuve (2) d'un réacteur nucléaire à eau sous pression.

## Description

L'invention concerne un procédé de fixation étanche d'un tube de traversée dans une paroi bombée d'un composant de réacteur nucléaire et en particulier d'un tube de traversée du fond ou du couvercle de la cuve d'un réacteur nucléaire à eau sous pression.

Les réacteurs nucléaires à eau sous pression comportent une cuve de forme globalement cylindrique qui est placée, en position de service, avec son axe vertical, et qui comporte un couvercle de fermeture à sa partie supérieure et un fond bombé à sa partie inférieure.

Le couvercle de la cuve est traversé par des adaptateurs de forme tubulaire disposés verticalement et qui assurent en particulier le passage des prolongateurs des grappes de commande de la réactivité du coeur disposés à l'intérieur de la cuve ou de colonnes de thermocouples permettant de mesurer la température dans différentes zones du coeur du réacteur, pendant son fonctionnement.

Les adaptateurs comportent une partie en saillie au-dessus du couvercle de la cuve qui peut être de grande hauteur et dont l'extrémité supérieure, dans le cas des adaptateurs de passage des prolongateurs des grappes de commande, porte un mécanisme de commande de déplacement d'un prolongateur et d'une barre de commande.

Le fond bombé de la cuve est traversé par une pluralité de tubes sensiblement verticaux appelés pénétrations de fond de cuve.

Ces pénétrations de fond de cuve comportent une extrémité en saillie sous le fond bombé qui est reliée à un conduit de mesure souple permettant de joindre le fond de la cuve à une salle d'instrumentation disposée dans la structure du bâtiment du réacteur.

Chacun des conduits de mesure et la pénétration de fond de cuve correspondante assurent le passage d'un doigt de gant dans lequel se déplace une sonde de mesure fixée à l'extrémité d'un élément flexible de grande longueur et son introduction à l'intérieur de la cuve et du coeur pour effectuer des mesures, par exemple des mesures de flux neutronique ou de température, à l'intérieur du coeur, pendant le fonctionnement du réacteur.

Les adaptateurs de traversée du couvercle de la cuve et les pénétrations de fond de cuve sont généralement en alliage de nickel et sont fixés par soudure sur le couvercle ou sur le fond bombé de la cuve qui sont réalisés en un acier à haute résistance.

Les traversées tubulaires, qu'il s'agisse des adaptateurs ou des pénétrations de fond de cuve, sont engagées à l'intérieur d'ouvertures de traversée cylindriques réalisées par perçage du couvercle ou du fond bombé de la cuve.

Généralement, les ouvertures de traversée présentent un diamètre légèrement inférieur au diamètre nominal des tubes de traversée à la température ambiante et on réalise le montage des tubes après les avoir portés à basse température par exemple à la température de l'azote liquide. On réalise ainsi un frettage du tube à l'intérieur du fond bombé.

La fixation étanche du tube de traversée dans la paroi bombée est complétée par une soudure réalisée du côté de la surface concave du fond bombé, autour de l'extrémité du tube qui est saillante ou sensiblement affleurante par rapport à cette surface concave.

Généralement, la soudure est réalisée par dépôt d'un métal d'apport à l'intérieur d'un chanfrein annulaire usiné dans la paroi bombée, au niveau de sa surface concave, autour de l'ouverture de traversée du tube.

Dans le cas de tubes en alliage de nickel, le fond du chanfrein de soudage annulaire est recouvert, préalablement au soudage, d'une couche de beurrage en un alliage de nickel similaire à l'alliage dans lequel est réalisé le tube de traversée. Le métal d'apport déposé dans le chanfrein de soudage présente lui-même une composition similaire à ou très proche de la composition de l'alliage de nickel du tube de traversée.

Le soudage est généralement réalisé par un procédé de soudage à l'arc et nécessite de nombreuses passes successives pour remplir le chanfrein de métal d'apport.

Le procédé de montage et de soudage d'un tube de traversée d'une paroi bombée d'une cuve de réacteur nucléaire qui nécessite de nombreuses opérations successives est donc complexe, long et coûteux. Du fait que la soudure est réalisée par dépôt d'une quantité de métal liquide relativement importante dans le chanfrein, le retrait du métal lors de la solidification engendre des déformations locales importantes dans la zone soudée et fait apparaître un champ de contraintes résiduelles élevées. Si le métal du tube est sensible à la corrosion sous tension, une fissuration en service peut apparaître. En conséquence, après un certain temps de fonctionnement du réacteur nucléaire, les tubes de traversée peuvent présenter des fissures produites par corrosion sous tension, en particulier au niveau de la soudure de la traversée sur la paroi bombée.

Il peut être alors nécessaire de réaliser une réparation ou un remplacement du tube de traversée défectueux.

Dans le cas où l'on effectue le remplacement du tube défectueux, les opérations de mise en place et de soudage du tube peuvent être relativement longues et coûteuses, même si le soudage réalisé par dépôt d'un métal d'apport est effectué à l'intérieur d'un chanfrein étroit de volume réduit, usiné dans le métal de la soudure du tube dont on effectue le remplacement.

Dans le cas des adaptateurs de traversée des couvercles de cuve, on a envisagé le remplacement complet du couvercle, dans le cas où des adaptateurs présentent des fissures, dans le but d'assurer une parfaite sécurité après changement du couvercle et redémarrage du réacteur nucléaire. Dans ce cas, il peut être nécessaire de disposer très rapidement d'un couvercle de cuve neuf, pour réduire au maximum le temps d'arrêt du réacteur nucléaire.

Du fait que le couvercle de cuve est une partie de composant extrêmement coûteuse, il est préférable de mettre en fabrication des couvercles de cuve de remplacement, à la demande et pour une utilisation précise.

Il est donc souhaitable de réduire au maximum la durée de fabrication des couvercles de cuve.

De manière plus générale, il est bien sûr nécessaire également de réduire au maximum le temps de fabrication de l'ensemble de la cuve d'un réacteur nucléaire, de manière à limiter les coûts de fabrication.

Parmi les opérations nécessaires à la fabrication d'une cuve de réacteur nucléaire qui ont tendance à allonger le temps de fabrication, la fixation étanche des tubes de traversée du couvercle et du fond de la cuve peut présenter une grande importance, du fait du grand nombre de traversées.

Il est donc tout-à-fait souhaitable de réduire au maximum le temps nécessaire pour réaliser la fixation étanche des adaptateurs et des pénétrations de fond de cuve.

Il est également souhaitable de disposer d'un procédé de remplacement d'adaptateurs ou de pénétrations de fond de cuve défectueux d'un réacteur nucléaire après une certaine période de fonctionnement, qui soit le plus rapide et le moins coûteux possible.

Le but de l'invention est donc de proposer un procédé de fixation étanche d'un tube de traversée dans une paroi bombée d'un composant de réacteur nucléaire et en particulier d'un tube de traversée du fond ou du couvercle de la cuve d'un réacteur nucléaire à eau sous pression, par engagement et frettage du tube de traversée dans une ouverture de traversée correspondante de la paroi bombée, suivant une zone de jonction sensiblement cylindrique, de manière que le tube ait une extrémité saillante externe, au moins du côté de la surface convexe de la paroi bombée et par soudage du tube fretté suivant la zone de jonction, ce procédé permettant de réduire de manière importante les déformations et les contraintes induites lors de la soudure du tube ainsi que le temps de réalisation et les coûts de la fabrication de la paroi bombée et du composant ou du remplacement d'un tube de traversée.

Dans ce but, après frettage du tube de traversée :
- on ferme de manière étanche l'extrémité saillante externe du tube de traversée de la paroi bombée,
- on fixe de manière étanche sur une partie du composant, une paroi complémentaire de la paroi bombée portant un canon à électrons, de manière à délimiter avec la surface interne concave de la paroi bombée, une chambre étanche dans laquelle le canon à électrons est susceptible d'effectuer le tir d'un faisceau d'électrons,
- on établit une pression réduite à l'intérieur de la chambre étanche,
- on dirige le tir du canon à électrons suivant une génératrice de la zone de jonction, et
- on déplace le canon à électrons en rotation autour de l'axe du tube de traversée, pour balayer la zone de jonction avec le faisceau d'électrons.

Afin de bien faire comprendre l'invention, on va maintenant décrire, à titre d'exemple non limitatif, en se référant aux figures jointes en annexe, un mode de réalisation du procédé suivant l'invention, utilisé pour la fixation étanche d'adaptateurs de traversée du couvercle de la cuve d'un réacteur nucléaire à eau sous pression.

La figure 1 est une vue schématique en coupe par un plan vertical de la cuve d'un réacteur nucléaire à eau sous pression.

La figure 2 est une vue en coupe par un plan vertical d'un couvercle de cuve d'un réacteur nucléaire à eau sous pression et d'un dispositif permettant de réaliser le soudage par faisceau d'électrons d'adaptateurs de traversée du couvercle.

La figure 3 est une vue de dessus suivant 3 de la figure 2.

La figure 4 est une vue en coupe du dispositif permettant le soudage des adaptateurs de traversée, en position opérationnelle sur le couvercle de cuve.

La figure 5 est une vue en coupe à plus grande échelle d'une partie d'extrémité interne d'un adaptateur de traversée, au cours du soudage par faisceau d'électrons de cet adaptateur sur le couvercle de cuve.

La figure 6 est une vue à plus grande échelle de la zone de l'adaptateur soudée par faisceau d'électrons.

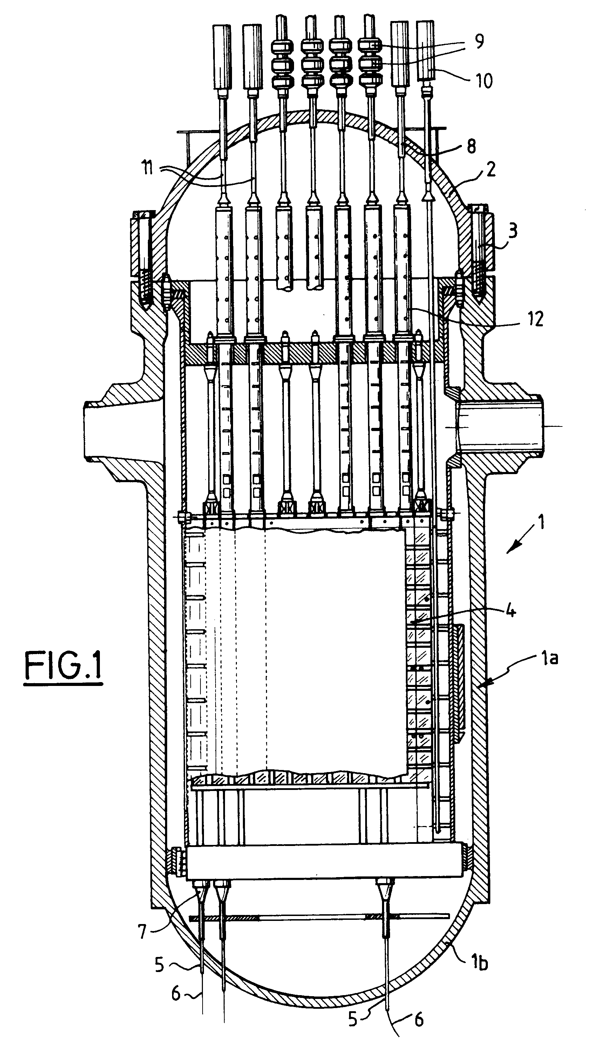

Sur la figure 1, on voit la cuve d'un réacteur nucléaire désignée de manière générale par le repère 1.

La cuve comporte une enveloppe externe 1a de forme sensiblement cylindrique fermée à son extrémité inférieure par un fond bombé 1b sensiblement hémisphérique.

L'extrémité supérieure de l'enveloppe 1a de la cuve 1 peut être fermée par un couvercle 2 sensiblement hémisphérique qui vient reposer sur une portée d'appui à la partie supérieure de l'enveloppe 1a et qui est fixé de manière étanche sur l'enveloppe 1a par des goujons de serrage 3. La cuve 1 renferme le coeur 4 du réacteur nucléaire constitué par des assemblages combustibles de forme prismatique disposés de manière juxtaposée.

Le fond 1b de la cuve est traversé par des pénétrations de fond de cuve 5 de forme tubulaire qui comportent des extrémités inférieures en saillie à l'extérieur du fond bombé 1b qui sont reliées chacune à un conduit de guidage d'instrumentation 6.

Au-dessus et à l'intérieur du fond bombé 1b, les pénétrations de fond de cuve 5 comportent chacune une extrémité supérieure saillante qui est engagée à l'intérieur d'une colonne de guidage d'instrumentation 7.

Les conduits de guidage 6, les pénétrations de fond de cuve 5 et les colonnes 7 permettent d'assurer le passage de doigts de gants renfermant des sondes de mesure, entre la salle d'instrumentation du réacteur nucléaire et le coeur 4 disposé à l'intérieur de la cuve.

Le couvercle 2 est traversé par des adaptateurs 8 de forme tubulaire qui comportent une extrémité supérieure saillante au-dessus du couvercle 2 sur laquelle est fixé soit un mécanisme de commande 9 d'une grappe de réglage de réactivité du coeur, soit un support 10 pour une colonne de thermocouples permettant de mesurer la température à l'intérieur du coeur.

A l'intérieur des adaptateurs 8 destinés à assurer le passage d'une tige de commande d'une grappe de réglage de réactivité qui est déplacée dans la direction verticale par les mécanismes 9, sont disposées des manchettes thermiques 11 comportant une partie d'extrémité inférieure se prolongeant à l'intérieur de la cuve.

A l'intérieur de la cuve 1, au-dessus du coeur 4, sont disposés les équipements internes supérieurs 12 du réacteur nucléaire qui comportent des éléments de guidage dans la direction verticale des grappes de réglage, dans le prolongement des manchettes thermiques 11 et des éléments de guidage des colonnes de thermocouples.

Dans le cas des réacteurs nucléaires à eau sous pression ayant une puissance de 1300 MWe, le couvercle de la cuve du réacteur est traversé par soixante-dix-sept adaptateurs répartis dans une zone centrale du couvercle.

De même, le fond de cuve est traversé par de nombreuses pénétrations reliées chacune à un conduit de mesure.

Les adaptateurs de traversée du couvercle de la cuve et les pénétrations de fond de cuve sont généralement réalisés en alliage de nickel alors que le couvercle et le fond de la cuve sont en acier faiblement allié à haute résistance.

Les adaptateurs de traversée du couvercle de cuve et les pénétrations de fond de cuve sont fixés de manière étanche à l'intérieur d'ouvertures traversant le couvercle ou le fond bombé, de manière à assurer une traversée parfaitement étanche à l'eau sous pression contenue dans la cuve du réacteur en fonctionnement dont la température est voisine de 310°C et la pression de 155 bars et de manière que la liaison entre le tube de traversée et la paroi bombée correspondante soit suffisamment résistante pour éviter tout risque d'éjection, sous l'effet de la pression à l'intérieur de la cuve du réacteur en fonctionnement.

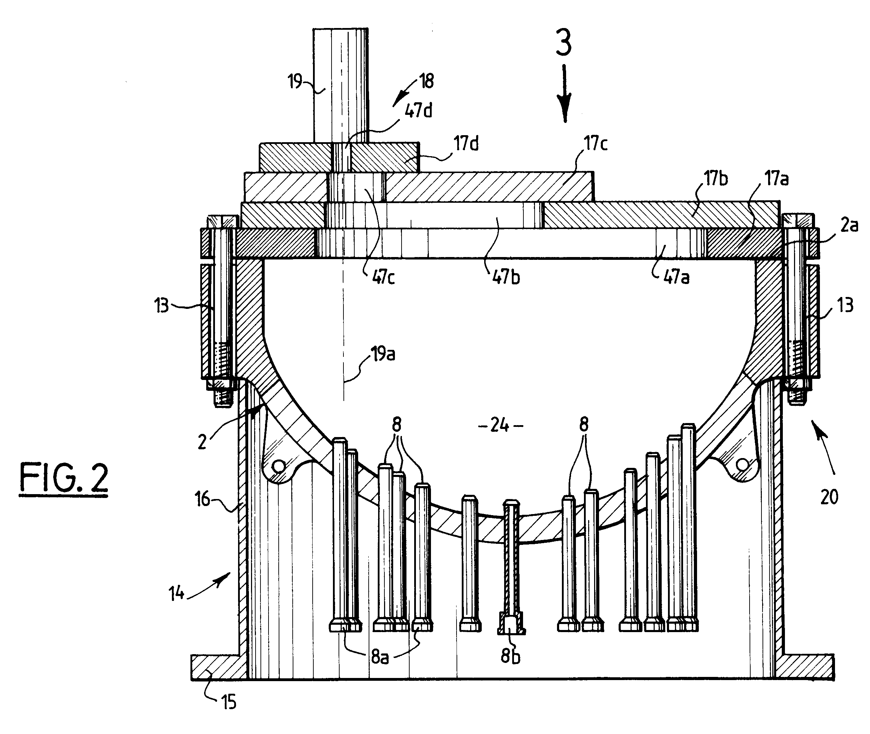

Sur la figure 2, on a représenté le couvercle 2 de fermeture de la cuve d'un réacteur nucléaire tel que représenté sur la figure 1, pendant une étape d'un procédé de fixation étanche des adaptateurs 8, suivant l'invention.

Le couvercle 2 est placé sur un stand d'intervention 14, dans une position inversée par rapport à sa position de service dans laquelle le couvercle assure la fermeture de la cuve du réacteur nucléaire. Le couvercle 2 est placé sur le stand 14 avec sa surface externe convexe dirigée vers le bas, cette position étant appelée position en bol, du couvercle.

Le stand 14 comporte une base annulaire 15 reposant sur le sol de l'atelier de fabrication du couvercle et une virole de support 16 disposée avec son axe vertical et fixée par son extrémité inférieure sur la base annulaire 15. Le couvercle 2 repose sur l'extrémité supérieure de la virole de support 16, par l'intermédiaire d'une partie externe périphérique en forme de couronne traversée par des ouvertures 13 de passage des goujons de fixation 3 du couvercle sur la cuve.

Sur la figure 2, le couvercle a été représenté pendant une étape du procédé de fixation étanche des adaptateurs 8 consistant en un soudage par faisceau d'électrons d'une partie périphérique interne des adaptateurs 8 sur le couvercle 2.

Pour effectuer ce soudage par faisceau d'électrons, on utilise un dispositif désigné de manière générale par le repère 18 et qui est constitué de quatre plateaux superposés 17a, 17b, 17c et 17d et d'un canon à électrons 19 fixé sur le quatrième plateau 17d constituant la partie supérieure externe de l'ensemble de plateaux superposés.

Le premier plateau 17a constituant le support du dispositif de soudage 18 repose sur la surface d'appui périphérique 2a du couvercle 2 et comporte des ouvertures traversantes 21 en vis-à-vis des ouvertures 13 de fixation du couvercle, à l'intérieur desquelles sont engagés des ensembles de fixation 20 comprenant chacun une vis de grande longueur et un écrou.

Le premier plateau 17a est fixé de manière étanche sur la surface d'appui 2a du couvercle 2, par l'intermédiaire d'un joint, comme il sera expliqué plus loin en regard de la figure 4 qui représente de manière plus précise le montage des plateaux du dispositif de soudage 18.

Les ouvertures 21 sont en nombre plus restreint que les ouvertures 13 de fixation du couvercle ; en effet, les ensembles 20 servent uniquement à assurer la fermeture étanche de l'extrémité supérieure du couvercle et ne subissent pas d'efforts de traction importants venant d'une surpression à l'intérieur du couvercle.

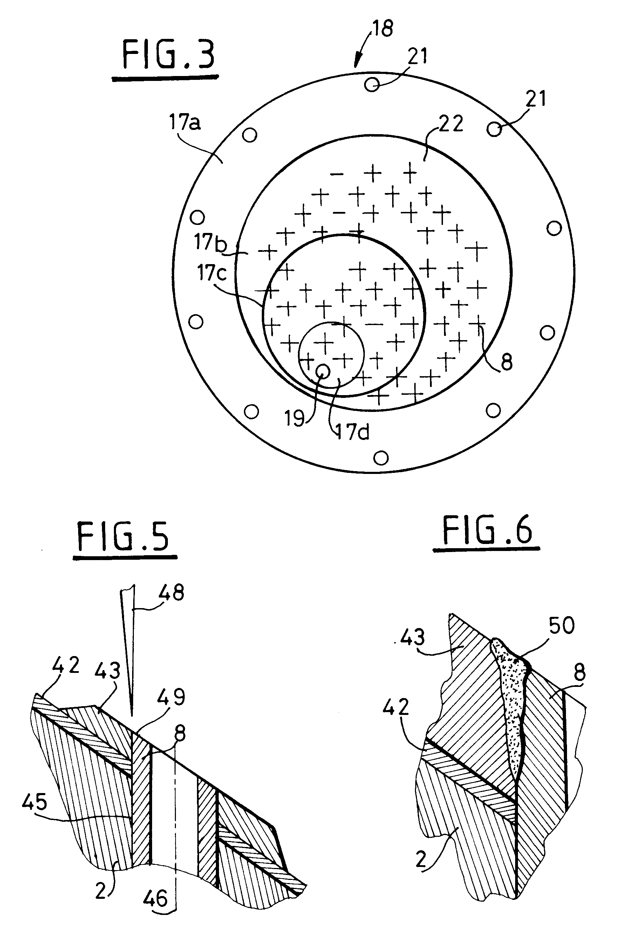

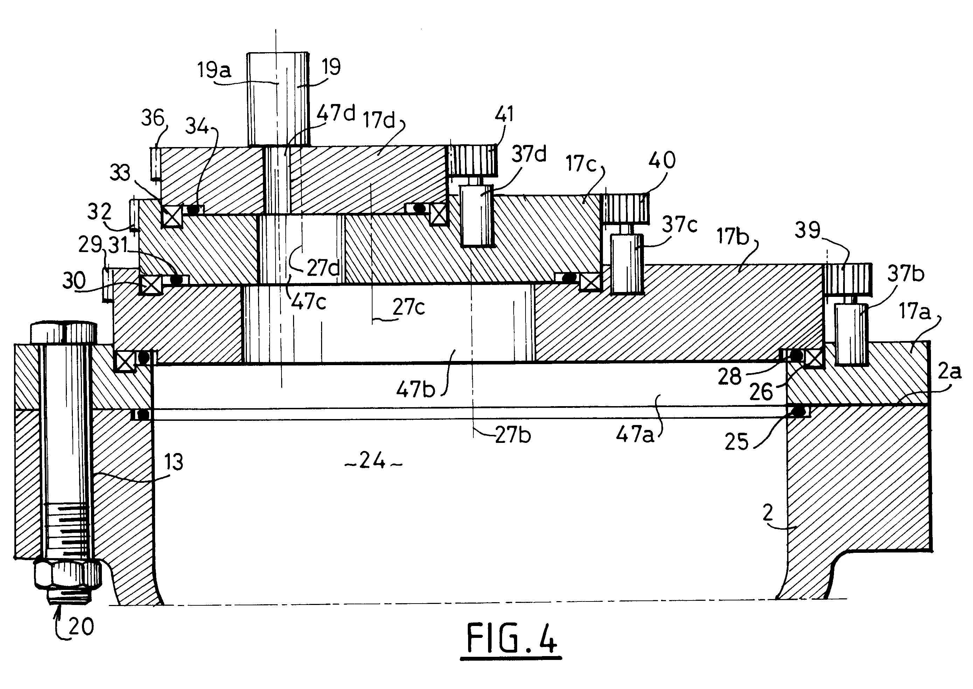

En outre, on voit sur la figure 3, que le plateau 17b qui est disposé dans une position centrée par rapport au plateau 17a lui-même rapporté sur la surface d'appui du couvercle de cuve, présente un diamètre tel qu'il recouvre toute la section de l'ouverture supérieure interne du couvercle. De ce fait, l'ensemble des adaptateurs de traversée 8 se trouve à l'aplomb du plateau 17b.

Le plateau 17c est monté sur le plateau 17b dans une position décentrée et présente un diamètre tel qu'il puisse balayer toute la zone occupée par les adaptateurs de traversée 8 sur la surface interne du couvercle 2, lorsque le plateau 17b est déplacé en rotation autour de son axe vertical par rapport au plateau fixe 17a.

Le quatrième plateau 17d est fixé sur le plateau 17c dans une position décentrée et porte le canon à électrons 19 qui est lui-même fixé dans une position décentrée par rapport à l'axe vertical du plateau 17d.

Le second plateau 17b est traversé par une ouverture au niveau de laquelle est fixé un ajutage 22 permettant de mettre en communication une chambre 24 délimitée par la surface intérieure du couvercle 2 et par les plateaux du dispositif de soudage 18, avec une installation de pompage qui peut être utilisée pour établir une pression réduite dans la chambre interne 24 du couvercle 2.

Comme il est visible sur la figure 4, le premier plateau 17a est rapporté sur la surface d'appui périphérique 2a du couvercle 2 avec interposition d'un joint d'étanchéité 25 et fixé par les ensembles à vis et écrou 20 permettant d'assurer un serrage suffisant du joint 25 pour obtenir une fermeture étanche de la chambre intérieure 24 du couvercle 2.

De plus, des moyens de roulement 26 sont montés rotatifs autour d'axes horizontaux à l'intérieur d'une gorge usinée à l'intérieur du premier plateau 17a. Le second plateau 17b repose sur les moyens de roulement 26, de manière à pouvoir tourner sur le premier plateau 17a, autour de son axe vertical 27b confondu avec l'axe 27a du premier plateau. Les moyens de roulement 26 sont alors dans une position haute permettant de soulever légèrement le plateau 17b au-dessus du plateau 17a.

Un joint d'étanchéité 28 est intercalé entre le premier plateau fixe 17a et le second plateau 17b monté rotatif sur le premier plateau autour de son axe 27b.

Lorsque le plateau se trouve en position haute, le joint d'étanchéité 28 continue à assurer l'étanchéité entre les plateaux 17a et 17b et n'oppose qu'une résistance faible au déplacement lent en rotation du plateau 17b.

Lorsque les moyens de roulement sont dans une position basse, ils s'effacent à l'intérieur du plateau 17a et le plateau 17b vient reposer sur le plateau 17a par l'intermédiaire du joint d'étanchéité 28.

Le second plateau 17b est usiné sur sa surface périphérique, à sa partie supérieure, pour constituer une denture droite 29 analogue à la denture d'une couronne dentée.

Le troisième plateau 17c repose sur le second plateau 17b par l'intermédiaire de moyens de roulement 30 et d'un joint d'étanchéité annulaire 31 analogues aux moyens de roulement 26 et au joint d'étanchéité 28 intercalés entre les plateaux 17a et 17b.

L'axe de rotation 27c du troisième plateau 17c sur le second plateau 17b est décalé d'une certaine distance par rapport à l'axe 27b de rotation du second plateau 17b par rapport au plateau fixe 17a.

Le troisième plateau 17c est usiné dans la partie supérieure de sa surface périphérique, pour constituer une denture droite 32 analogue à la denture d'une couronne dentée.

Le quatrième plateau 17d repose sur le troisième plateau 17c, par l'intermédiaire de moyens de roulement 33 disposés à l'intérieur d'une gorge usinée sur la surface supérieure du troisième plateau 17c. De plus, un joint d'étanchéité glissant 34 est intercalé entre le troisième plateau 17c et le quatrième plateau 17d.

L'axe de rotation 27d du quatrième plateau 17d sur le troisième plateau 17c est décalé d'une certaine distance par rapport à l'axe 27c de rotation du troisième plateau 17c sur le second plateau 17b.

La partie supérieure de la surface périphérique du quatrième plateau 17d est usinée pour constituer une denture droite 36 analogue à la denture d'une couronne dentée.

Le canon à électrons 19 présente un axe de tir 19a d'un faisceau d'électrons, de direction verticale et qui est placé dans une position décalée par rapport à l'axe de rotation 27d du quatrième plateau, d'une distance sensiblement égale au rayon de la surface externe d'un adaptateur 8.

Des motoréducteurs 37b, 37c et 37d d'entraînement en rotation des plateaux 17b, 17c et 17d respectivement sont fixés sur le plateau 17a, le plateau 17b et le plateau 17c, respectivement, de manière que leurs arbres de sortie soient verticaux.

L'arbre de sortie du motoréducteur 37b porte un pignon 39 qui engrène avec la couronne dentée 29 du second plateau 17b.

L'arbre de sortie du second motoréducteur 37c porte un pignon d'entraînement 40 qui engrène avec la couronne dentée 32 du troisième plateau 17c.

L'arbre de sortie du troisième motoréducteur 37d porte un pignon d'entraînement 41 qui engrène avec la couronne dentée 36 du quatrième plateau 17d.

Les motoréducteurs 37b et 37c comportent des moyens d'asservissement qui permettent de déplacer les plateaux rotatifs 17b et 17c, de manière à balayer l'ensemble de la zone du couvercle 2 dans laquelle sont disposés les adaptateurs 8, comme il sera décrit plus loin.

Préalablement au soudage par faisceau d'électrons constituant une étape essentielle du procédé suivant l'invention, on effectue diverses étapes nécessaires pour réaliser le montage des adaptateurs 8 sur le couvercle, dans leur position de soudage.

On se reportera aux figures 2 et 5 pour décrire ces étapes préalables au soudage.

Après formage et usinage, le couvercle 2 est revêtu, sur sa surface interne, par fusion et dépôt d'un métal d'apport, par exemple en utilisant une torche de soudage à l'arc, d'une couche d'acier inoxydable d'une épaisseur de quelques millimètres. Cette couche d'acier inoxydable 42 ou couche de beurrage est analogue à une couche de rechargement d'une surface métallique.

On dépose ensuite sur la couche de beurrage 42, des talons tels que 43 (figure 5) constitués par une couche de beurrage en alliage de nickel d'une épaisseur de l'ordre de 20 mm.

On peut également en variante déposer directement les talons 43 sur le métal de base 2 en ayant interrompu le revêtement 42 sur la zone correspondante.

Les talons 43 sont déposés dans des zones discontinues, sur la couche de beurrage 42, au niveau de chacune des traversées d'adaptateur 8, comme il est visible sur la figure 5.

On peut également prévoir un talon 43 déposé d'une manière continue dans toute la zone des traversées d'adaptateurs.

On réalise ensuite un perçage de précision du couvercle de la cuve, pour réaliser les ouvertures de passage et de fixation 45 des adaptateurs 8, dans chacune des zones de la surface intérieure du couvercle 2 recouvertes par un talon 43 constitué par un alliage de nickel analogue à l'alliage des adaptateurs de traversée 8.

Chacune des ouvertures de traversée 45 comporte un axe 46 vertical placé dans une position parfaitement déterminée et correspondant à l'axe d'un adaptateur à mettre en place dans le couvercle 2 de la cuve. Le diamètre des ouvertures 45 est légèrement inférieur au diamètre nominal externe des adaptateurs 8 à la température ambiante.

On effectue ensuite le montage des adaptateurs 8 dans les ouvertures 45, en portant l'extrémité destinée à venir à l'intérieur de la paroi du couvercle 2 à la température de l'azote liquide. Les adaptateurs 8 sont introduits dans les ouvertures 45 et réchauffés à la température ambiante, de manière à réaliser un frettage de la partie d'extrémité interne de l'adaptateur à l'intérieur de l'ouverture 45 traversant le couvercle de cuve et les couches de beurrage 42 et 43.

Les adaptateurs 8 sont assemblés par frettage dans les ouvertures 45 suivant une surface de jonction présentant une forme cylindrique d'axe vertical 46.

Le couvercle 2 dans lequel l'ensemble des adaptateurs de traversée 8 ont été montés et frettés est alors placé sur le stand d'intervention 14, dans sa position représentée sur la figure 2.

Le dispositif de soudage 18 est amené dans son ensemble au-dessus de la surface d'appui 2a du couvercle 2 et déposé sur cette surface d'appui, de manière que le premier plateau fixe 17a recouvre parfaitement la surface d'appui 2a. Cette mise en place du dispositif de soudage 18 peut être réalisée par exemple en utilisant un pont roulant et en prévoyant des oreilles de levage sur le premier plateau fixe 17a.

Préalablement à la dépose du dispositif de soudage 18 sur la surface d'appui 2a du couvercle 2, un joint d'étanchéité 25 a été placé à l'intérieur du logement de joint, à la périphérie interne du couvercle 2.

Le plateau fixe 17a est déposé sur la face d'appui 2a, dans une disposition telle que les ouvertures traversant la partie périphérique du plateau 17a viennent parfaitement en coïncidence chacune avec une ouverture 13 de fixation du couvercle.

On réalise la fixation étanche du dispositif de soudage 18 sur la surface d'appui 2a du couvercle 2, par l'intermédiaire d'ensembles à vis et écrou 20 engagés dans les ouvertures alignées du plateau fixe 17a et du couvercle 2 et en réalisant le serrage du plateau 17a contre la surface d'appui 2a avec interposition du joint 25.

Le montage et le frettage à l'azote des adaptateurs de traversée 8 sont réalisés de manière que les adaptateurs présentent une extrémité externe 8a disposée du côté de la face convexe externe du couvercle 2 et à une certaine distance dans la direction verticale de cette face convexe ainsi qu'une extrémité interne légèrement saillante à l'intérieur du couvercle, par rapport à la surface interne concave du couvercle.

Les extrémités externes 8a des adaptateurs 8 sont toutes disposées dans un même plan perpendiculaire aux axes des adaptateurs et à l'axe du couvercle.

On engage, à l'intérieur des extrémités externes 8a des adaptateurs 8 sur lesquels on peut réaliser par exemple le montage des mécanismes de commande, des bouchons de fermeture étanche tels que 8b (figure 2) de manière à compléter la fermeture étanche de la chambre 24.

L'extrémité interne des adaptateurs 8 légèrement saillante par rapport à la surface concave interne du couvercle 2 est arasée par usinage, jusqu'au niveau des surfaces internes des couches de beurrage en alliage de nickel constituant les talons 43, comme représenté sur la figure 5.

On établit une pression réduite à l'intérieur de la chambre 24 fermée de manière étanche par le dispositif 18, par l'intermédiaire du circuit de pompage relié à l'ajutage 22 traversant le plateau 17b.

Il est à remarquer que le frettage à l'azote des adaptateurs de traversée 8 à l'intérieur des ouvertures 45 traversant le couvercle de cuve permet d'assurer une jonction suffisamment étanche entre les adaptateurs et les ouvertures du couvercle de cuve pour qu'on puisse établir une pression réduite, à l'intérieur de la chambre 24, nécessaire pour la mise en oeuvre du soudage par faisceau d'électrons.

Les plateaux 17b, 17c et 17d sont orientés de manière que l'axe de tir 19a du canon à électrons 19 soit disposé suivant une génératrice d'une première zone de jonction cylindrique entre un premier adaptateur 8 et l'ouverture de traversée 45 correspondante du couvercle de cuve. L'axe 27d du plateau 17d est alors dirigé suivant l'axe de l'adaptateur 8 et de son ouverture de traversée 45.

La mise en place des plateaux tournants 17b, 17c et 17d est réalisée en faisant tourner d'un angle voulu le plateau 17b sur le plateau 17a, le plateau 17c sur le plateau 17b, autour de leurs axes de rotation respectifs, 27b et 27c.

Cette rotation est réalisée grâce aux motoréducteurs d'entraînement correspondants 37b et 37c en prise avec la couronne dentée constituant une partie supérieure de la périphérie du plateau.

Les plateaux sont montés rotatifs par l'intermédiaire de galets de roulement qui peuvent être placés en position rétractée, afin de reposer chaque plateau sur un joint d'étanchéité correspondant, à l'issue de la rotation des plateaux pour amener l'axe de tir 19a dans la position voulue. Chacun des plateaux tournants 17b, 17c vient alors reposer sur un joint d'étanchéité respectif 28, 31 porté par le plateau 17a ou 17b. Le poids propre des plateaux en appui sur les joints d'étanchéité assure un écrasement suffisant des joints pour obtenir une bonne étanchéité.

Les plateaux sont donc parfaitement immobiles et reposent les uns sur les autres, lorsqu'on effectue la mise sous pression réduite de l'enceinte 24.

Comme indiqué plus haut, lorsque les plateaux tels que 17b et 17c sont soulevés pour être déplacés en rotation, les joints d'étanchéité tels que 28 et 31 sur lesquels ils reposent continuent à assurer l'étanchéité avec le plateau inférieur tel que 17a ou 17b, l'enceinte 24 reste donc étanche et peut être maintenue sous vide même dans le cas où l'on déplace les plateaux en rotation.

Le quatrième plateau 17d est monté rotatif et étanche, grâce à un joint glissant 34, sur le troisième plateau 17c, de manière à réaliser le déplacement en rotation du canon à électrons et le balayage par le faisceau d'électrons 48 dirigé suivant l'axe de tir 19a et déplacé en rotation par le plateau 17d, autour de l'axe 46 de l'adaptateur de traversée 8 et de l'ouverture 45, aligné avec l'axe de rotation 27d du plateau 17d.

On réalise ainsi la fusion du métal de l'adaptateur 8 et du talon 43, dans une zone 49 de forme cylindrique et de faible épaisseur. La solidification du métal fondu de la zone 49 après le passage du faisceau d'électrons 48 permet d'obtenir un cordon de soudure 50 tel que représenté sur la figure 6 assurant une jonction étanche entre l'adaptateur 8 et le talon 43 qui sont en un même alliage de nickel. Le soudage est donc réalisé entre des matériaux parfaitement compatibles.

En outre, la zone fondue 49 présente un très faible volume et la quantité de chaleur apportée par le faisceau d'électrons 48 aux pièces à joindre est elle-même très faible. Il en résulte une très faible déformation des pièces au voisinage du cordon de soudure et une réduction considérable des contraintes résiduelles de traction dans l'adaptateur de traversée, par rapport au procédé selon l'art antérieur.

En outre, la hauteur du cordon de soudure 50 dans la direction axiale de l'adaptateur 8 peut être facilement fixée à une valeur supérieure ou égale à l'épaisseur de l'adaptateur, cette condition étant nécessaire pour obtenir une soudure d'étanchéité et de maintien mécanique satisfaisante. En outre, la soudure obtenue est de très grande qualité et peut être facilement contrôlée.

D'autres avantages extrêmement importants sont obtenus grâce au procédé suivant l'invention. En particulier, les temps nécessaires pour réaliser la soudure d'un adaptateur sont considérablement réduits par rapport au temps nécessaire pour réaliser la soudure d'un adaptateur par un procédé selon l'art antérieur avec dépôt d'un métal d'apport dans un chanfrein. En effet, les procédés suivant l'art antérieur nécessitent de nombreuses passes successives pour remplir le chanfrein de métal d'apport.

Il est bien évident que la faible quantité de chaleur apportée aux pièces à joindre au moment de la soudure et le faible volume de la zone fondue permettent d'éviter d'engendrer des déformations notables de l'adaptateur et de créer des contraintes importantes sur la surface intérieure de l'adaptateur au voisinage de la zone soudée. On évite ainsi une tendance à la corrosion sous tension de l'adaptateur lorsqu'il vient en contact avec le fluide primaire du réacteur.

Lorsqu'on a réalisé le soudage d'un premier adaptateur, les plateaux 17b et 17c sont déplacés en rotation de manière à aligner l'axe de tir 19a du canon à électrons 19 sur une génératrice de la zone de jonction d'un second adaptateur. On arrête alors le déplacement en rotation des plateaux 17b et 17c qui sont alors amenés à venir reposer sur leurs joints d'étanchéité dans leur nouvelle position permettant d'aligner l'axe de tir du canon de soudage sur une génératrice d'une zone de jonction d'un nouvel adaptateur 8 et l'axe du plateau 17d sur l'axe du nouvel adaptateur 8.

Le soudage du nouvel adaptateur est réalisé comme précédemment.

On peut ainsi par déplacement successif des plateaux 17b et 17c puis mise en rotation sur un tour complet ou de préférence sur un peu plus d'un tour du plateau 17d, réaliser le soudage de l'ensemble des adaptateurs de traversée du couvercle.

Les déplacements des plateaux et en particulier des plateaux 17b et 17c peuvent être asservis, de manière à placer successivement et de manière automatique l'axe de tir du canon à électrons sur des zones de jonction d'adaptateurs successifs.

On réalise ainsi le soudage de tous les adaptateurs 8 traversant le couvercle 2.

Il est à remarquer que chacun des plateaux 17a, 17b, 17c et 17d est traversé par une ouverture respective 47a, 47b, 47c et 47d ayant une dimension et une disposition telles que les ouvertures des quatre plateaux se trouvent constamment en vis-à-vis suivant l'axe de tir 19a, de manière à assurer le passage du faisceau d'électrons 48 depuis le canon à électrons 19 jusqu'à la chambre étanche 24 dans laquelle débouche la zone de jonction des adaptateurs.

Comme il est visible sur la figure 5, l'arasage de l'extrémité interne de l'adaptateur 8 permet un accès direct du faisceau d'électrons 48 à l'extrémité interne de la zone de jonction entre l'adaptateur 8 et l'ouverture 45 dans laquelle cet adaptateur est engagé. On peut ainsi effectuer la soudure exactement suivant la zone de jonction cylindrique entre l'adaptateur et l'ouverture de traversée du couvercle.

La distance entre le canon à électrons et la partie d'extrémité interne de chacun des adaptateurs est essentiellement variable d'un adaptateur à un autre, par exemple dans un plan de coupe axial, comme représenté sur la figure 2.

La variation de distance entre le canon à électrons et la zone à souder peut être compensée soit par un déplacement vertical du canon à électrons sur le plateau 17d, soit par une variation des conditions de focalisation du faisceau d'électrons 48.

Cette variation est réglée d'une part avant le début du soudage de chaque traversée et d'autre part est assurée d'une manière continue pendant le soudage par un asservissement de position.

Le procédé de fixation d'un tube de traversée suivant l'invention permet de réduire dans de grandes proportions le temps nécessaire pour la construction d'une cuve de réacteur nucléaire. En outre, les tubes de traversée fixés en utilisant le procédé suivant l'invention subissent des contraintes beaucoup plus faibles que dans le cas des procédés suivant l'art antérieur et présentent une tendance beaucoup plus faible à la fissuration par corrosion sous tension.

Le procédé selon l'invention ne se limite pas au mode de réalisation qui a été décrit.

C'est ainsi que ce procédé peut être mis en oeuvre pour réaliser la fixation étanche des pénétrations de fond de cuve dans le fond bombé de la cuve.

Pour cela, on utilise un dispositif comportant au moins un plateau de support d'un canon à électrons qui peut être fixé à l'intérieur de la cuve, au-dessus du fond bombé et qui réalise une isolation étanche du fond bombé grâce à un joint périphérique gonflable venant en appui sur la surface intérieure de la cuve après mise en place du plateau support du canon à électrons.

Il est bien évident qu'on peut utiliser pour le soudage des pénétrations de fond de cuve, un ensemble de plateaux superposés tels que décrits dans le cas du soudage des adaptateurs de traversée du couvercle de la cuve comportant un plateau de support fixe à la périphérie duquel est disposé un joint gonflable.

Les opérations préalables au soudage par faisceau d'électrons sont sensiblement identiques dans le cas des adaptateurs de traversée des couvercles et dans le cas des pénétrations de fond de cuve. En particulier, les pénétrations de fond de cuve doivent être fermées de manière étanche à leur partie inférieure saillante en-dessous du fond bombé pour qu'on puisse réaliser la mise sous pression réduite de l'enceinte comprise entre les plateaux du dispositif de soudage et le fond bombé de la cuve.

En utilisant plusieurs plateaux superposés, on peut réaliser successivement le soudage de chacune des pénétrations traversant le fond de la cuve du réacteur nucléaire.

Il est bien évident que le procédé de l'invention peut s'appliquer également dans le cas où l'on effectue la fixation d'un seul tube de traversée d'une paroi bombée telle que le couvercle ou le fond de la cuve d'un réacteur nucléaire. Une telle opération peut être nécessaire pour effectuer le remplacement d'un adaptateur de traversée ou d'une pénétration de fond de cuve devenu défectueux en service.

Dans le cas du soudage d'un seul tube de traversée au cours de l'intervention sur le couvercle ou le fond de la cuve du réacteur nucléaire, on peut utiliser une paroi étanche constituée uniquement de deux plateaux superposés ; le plateau supérieur est alors mis en rotation sur le plateau inférieur pour réaliser le balayage par le faisceau d'électrons.

Le dispositif pour réaliser le soudage par faisceau d'électrons du tube de traversée peut être différent du dispositif qui a été décrit et comporter des moyens différents de plateaux tournants pour réaliser le déplacement et la mise en place du canon à électrons dans l'alignement de la zone à souder.

## Revendications

**1.-** Procédé de fixation étanche d'un tube de traversée (5, 8) dans une paroi bombée (1b, 2) d'un composant (1) de réacteur nucléaire et en particulier d'un tube de traversée (5, 8) du fond (1b) ou du couvercle (2) de la cuve (1) d'un réacteur nucléaire à eau sous pression, par engagement et frettage du tube de traversée (5, 8) suivant une zone de jonction sensiblement cylindrique, dans une ouverture de traversée (45) correspondante de la paroi bombée (1b, 2), de manière que le tube ait une extrémité saillante externe, au moins du côté de la surface convexe de la paroi bombée (1,b, 2) et par soudage du tube fretté suivant la zone de jonction, caractérisé par le fait, qu'après frettage du tube de traversée (5, 8) :
- on ferme de manière étanche l'extrémité saillante externe du tube de traversée (5, 8),
- on fixe de manière étanche sur une partie du composant (1), une paroi (18) complémentaire de la paroi bombée (1b, 2) portant un canon à électrons (19), de manière à délimiter avec la surface interne concave de la paroi bombée (1b, 2), une chambre étanche dans laquelle le canon à électrons (19) est susceptible d'effectuer le tir d'un faisceau d'électrons (19a),
- on établit une pression réduite à l'intérieur de la chambre étanche (24),
- on dirige le tir (19a) du canon à électrons suivant une génératrice de la zone de jonction du tube de traversée (5, 8), et
- on déplace le canon à électrons (19) en rotation autour de l'axe (46) du tube de traversée, pour balayer la zone de jonction avec le faisceau d'électrons (48) et réaliser le soudage du tube de traversée (5, 8).

**2.-** Procédé suivant la revendication 1, caractérisé par le fait qu'on réalise le soudage d'une pluralité de tubes de traversée (5, 8) de la paroi bombée (1b, 2) du composant (1), par mise en place du canon à électrons (19) successivement en position de soudage de chacun des tubes (5, 8) de la pluralité de tubes de traversée.

**3.-** Procédé suivant la revendication 2, caractérisé par le fait qu'on règle la distance de focalisation du faisceau d'électrons (48) avant d'effectuer le soudage de chacun des tubes (5,8) de la pluralité de tubes de traversée.

**4.-** Procédé suivant la revendication 1, pour la fixation étanche d'au moins un tube de traversée (5, 8) dans une paroi bombée constituée par le fond (1b) ou le couvercle (2) de la cuve (1) d'un réacteur nucléaire à eau sous pression, le fond (1b) ou le couvercle (2) étant en un acier faiblement allié à haute résistance et le tube de traversée (5, 8) en un alliage de nickel, caractérisé par le fait que, préalablement à l'engagement et au frettage du tube de traversée (5, 8), on recouvre au moins partiellement la surface intérieure concave de la paroi bombée (1b, 2) par une couche de beurrage en acier inoxydable, on dépose, dans au moins une zone de la paroi bombée (1b, 2) dans laquelle on doit fixer un tube de traversée (5, 8), une couche d'alliage de nickel d'une nuance analogue à la nuance du tube de traversée (5, 8), et on réalise le perçage de la paroi bombée (1b, 2) et des couches de revêtement (42) en acier inoxydable et (43) en alliage de nickel à un diamètre légèrement inférieur au diamètre nominal à la température ambiante du tube de traversée (5, 8), et qu'on monte à la température de l'azote liquide, le tube de traversée (5, 8) dans l'ouverture (45) de la paroi bombée et qu'après frettage du tube de traversée (5, 8), on réalise le soudage par faisceau d'électrons du tube de traversée (5, 8) et de la couche de revêtement en alliage de nickel (43).

**5.-** Procédé suivant la revendication 4, caractérisé par le fait que la couche de revêtement (43) en alliage de nickel de la paroi bombée (1b, 2) présente une épaisseur de l'ordre de 20 mm.

**6.-** Procédé selon l'une quelconque des revendications 4 et 5, pour la fixation d'un adaptateur de traversée (8) du couvercle (2) de la cuve (1) d'un réacteur nucléaire à eau sous pression, caractérisé par le fait que le frettage de l'adaptateur (8) à l'intérieur de l'ouverture de traversée (45) du couvercle (2) et le soudage par faisceau d'électrons de l'adaptateur (8) et de la couche de revêtement (43) en alliage de nickel sont effectués sur le couvercle de cuve (2) disposé avec sa surface concave interne dirigée vers le haut, le couvercle étant déposé sur un stand d'intervention (14).

**7.-** Procédé suivant l'une quelconque des revendications 4, 5 et 6, caractérisé par le fait qu'on frette le tube (5, 8) à l'intérieur de l'ouverture (45) traversant la paroi bombée (1b, 2), de manière que le tube présente une extrémité saillante interne par rapport à la surface concave interne de la paroi bombée (1b, 2) et que, préalablement au soudage par faisceau d'électrons du tube de traversée (5, 8), on arase par usinage l'extrémité saillante interne du tube de traversée (5, 8), jusqu'au niveau de la surface de la couche de revêtement (43) en alliage de nickel.

**8.-** Procédé suivant l'une quelconque des revendications 1 à 7, caractérisé par le fait que la paroi complémentaire (18) de la chambre étanche (24) est constituée par au moins deux plateaux (17a, 17b, 17c, 17d) superposés entre lesquels est interposé au moins un joint d'étanchéité annulaire (28, 31, 34).

**9.-** Dispositif de fixation étanche par soudage par faisceau d'électrons d'un tube de traversée (5, 8) dans une paroi bombée (1b, 2) d'un composant (1) de réacteur nucléaire et en particulier d'un tube de traversée (5, 8) du fond (1b) ou du couvercle (2) de la cuve (1) d'un réacteur nucléaire à eau sous pression, caractérisé par le fait qu'il comporte au moins deux plateaux superposés dont l'un (17a) ou plateau fixe est destiné à venir reposer de manière étanche contre une partie du composant (1) et dont un autre plateau (17b) est monté mobile en rotation sur le premier plateau fixe (17a), avec interposition d'un joint d'étanchéité (28), supportant directement ou indirectement un canon à électrons (19), les plateaux (17a, 17b, 17c et 17d) comportant des ouvertures (47a, 47b, 47c et 47d) en vis-à-vis, de manière à assurer le passage d'un faisceau d'électrons (48), suivant la direction de tir (19a) du canon à électrons (19).

**10.-** Dispositif suivant la revendication 9, caractérisé par le fait qu'il comporte un second plateau (17b) monté rotatif sur le premier plateau fixe (17a) avec interposition d'un joint d'étanchéité (28), un troisième plateau (17c) monté rotatif sur le second plateau (17b), avec interposition d'un joint d'étanchéité annulaire (31) et un quatrième plateau (17d) monté rotatif sur le troisième plateau (17c) avec interposition d'un joint d'étanchéité glissant (34),
- un canon à électrons (19) fixé sur le quatrième plateau (17d),
- les axes de rotation (27b, 27c et 27d) des second, troisième et quatrième plateaux étant parallèles entre eux et distincts, de manière à assurer un montage excentré des plateaux (17b, 17c, 17d) qui présentent une disposition relative et des dimensions telles que la rotation du second plateau (17b) et du troisième plateau (17c) permet de réaliser l'alignement de la direction de tir (19a) du canon à électrons (19) sur une zone de soudage d'un tube de traversée quelconque de la paroi bombée (1b, 2), l'axe de tir (19a) du canon à électrons (19) parallèle à l'axe de rotation (27d) du quatrième plateau (17d) étant éloigné de cet axe de rotation du quatrième plateau (17d) d'une distance sensiblement égale au rayon extérieur du tube de traversée (5, 8).

**11.-** Dispositif suivant la revendication 10, caractérisé par le fait que le second, le troisième et le quatrième plateaux (17b, 17c, 17d) comportent une partie périphérique (29, 32, 36) constituant une couronne dentée en prise avec un pignon d'entraînement respectif (39, 40, 41) solidaire de l'arbre de sortie d'un motoréducteur d'entraînement en rotation (37b, 37c, 37d).

**12.-** Dispositif suivant l'une quelconque des revendications 10 et 11, caractérisé par le fait que les plateaux superposés (17b, 17c, 17d) sont montés rotatifs successivement l'un sur l'autre, par l'intermédiaire de moyens de roulement tels que des galets (26, 30, 33).
